# EUROPEAN PATENT SPECIFICATION

(11) **EP 3 133 472 B1**
(45) Date of publication and mention of the grant of the patent: **17.02.2021**
(21) Application number: 16184631.6
(22) Date of filing: 17.08.2016
(51) Int. Cl.: G06F 3/01, G06F 3/048, G05D 23/19, G06F 3/16, G10L 15/22

(54) **ADAPTIVE USER INTERFACE FOR AN HVAC SYSTEM**
ADAPTIVE BENUTZERSCHNITTSTELLE FÜR EIN HLK-SYSTEM
INTERFACE UTILISATEUR ADAPTATIVE POUR UN SYSTÈME HVAC

(30) Priority: 20.08.2015 US 201514831174
(43) Date of publication of application: 22.02.2017
(73) Proprietor: Honeywell International Inc., Morris Plains, NJ 07950 (US)
(72) Inventor: CHANG, Harry M., Morris Plains, NJ New Jersey 07950 (US); AKODE, Nilesh, Morris Plains, NJ New Jersey 07950 (US); PARKS, Mary, Morris Plains, NJ New Jersey 07950 (US)
(74) Representative: Houghton, Mark Phillip

(56) References cited:
- WO-A2-2005/100874
- WO-A2-2014/124159
- US-A1- 2011 202 351
- US-A1- 2014 122 085
- US-A1- 2015 053 779
- US-B1- 6 697 894

## Description

### Technical Field

The present disclosure relates to an adaptive user interface for an HVAC system.

### Background

When working with a heating, ventilation, and air conditioning (HVAC) system at a large facility (e.g., a large commercial or industrial facility, such as a multi-level office building), a user (e.g., worker, operator, manager, etc.) may need to perform different tests on different components of the HVAC system. For each test, the user may need to be at a specific location (e.g., within an arm's length of the component and/or where the component is installed) where the user can directly operate the component(s) being tested. At the same time, the user may need access to a computer-based HVAC control system (e.g., an HVAC control software application or system) running on the user's laptop, smart phone, or other computing device, so that the user can enter information (e.g., data) into, and/or observe information from, the system during the test.

Patent document number US2015/053779A1 describes an HVAC controller controllable in response to a natural language audio message that is not recognizable by the HVAC controller as a command, where the natural language audio message is translated into a command recognizable by the HVAC controller. Voice recognition software identifies a trigger phrase included in the natural language audio message and in response the HVAC controller performs an action. The voice recognition software is used to create a natural language text based message from a recorded voice message or streamed voice message, where the natural language text based message is translated into the command recognizable by the HVAC controller. In response to the command, the HVAC controller performs an action and/or respond with a natural language text based or audio message. A user communicate with the thermostat via the thermostat and/or a remote device

In many large commercial and/or industrial facilities, however, the environment (e.g., room(s)) in which the HVAC system components are located may prevent the HVAC control system from running on the user's laptop or smart phone. For example, the HVAC control system may run over a data network, which may not be available (e.g., accessible) in the environment in which the HVAC system components are located. Further, the environment in which the HVAC system components are located may be too small and/or cramped for the user to be able to use his laptop or smart phone. As such, the user may have to leave his laptop or smart phone in one (e.g., fixed) location during the testing, and constantly go (e.g., walk) back and forth between the laptop or smart phone and the location of the test (e.g., the location of the component(s) being tested) in order to conduct the test (e.g., enter and/or observe the needed information).

The present invention in its various aspects is as set out in the appended claims.

### Brief Description of the Drawings

Figure 1 illustrates an example of a system that includes an adaptive user interface for an HVAC system in accordance with the present disclosure.
Figure 2 illustrates an example of an adaptive multimodal user interface system in accordance with the present disclosure.
Figures 3A-3B illustrate an example of an adjustment of the visualization format for information displayed on an adaptive user interface in accordance with the present disclosure.

### Detailed Description

An adaptive user interface for an HVAC system is described herein. For example, one or more embodiments include a user interface configured to display information associated with a component of a heating, ventilation, and air conditioning (HVAC) system, a wireless interface, wherein the wireless interface is configured to receive a voice communication from a user, wherein the voice communication includes information associated with the component of the HVAC system, a memory, and a processor configured to execute executable instructions stored in the memory to enter the information associated with the component of the HVAC system included in the voice communication from the user in the display on the user interface.

An adaptive user interface for a heating, ventilation, and air conditioning (HVAC) system in accordance with the present disclosure can allow a user to perform tests on components of an HVAC system in a quicker, easier, and/or more efficient manner than previous HVAC system testing approaches. For example, an adaptive user interface for an HVAC system in accordance with the present disclosure can allow a user to stay in one location while testing a component(s) of an HVAC system (e.g., the user may not have to leave his computing device in one location, and go back and forth between that location and the location of the component(s) being tested).

Further, an adaptive user interface for an HVAC system in accordance with the present disclosure can successfully operate in a noisy environment. For example, an adaptive user interface for an HVAC system in accordance with the present disclosure can successfully operate in an environment that includes a large amount and/or different types of background noise.

In the following detailed description, reference is made to the accompanying drawings that form a part hereof. The drawings show by way of illustration how one or more examples related to the disclosure may be practiced.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

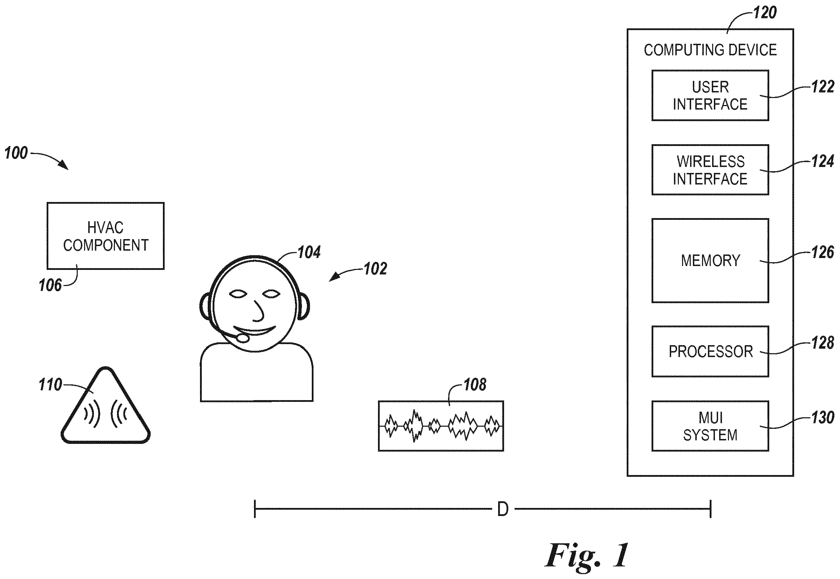

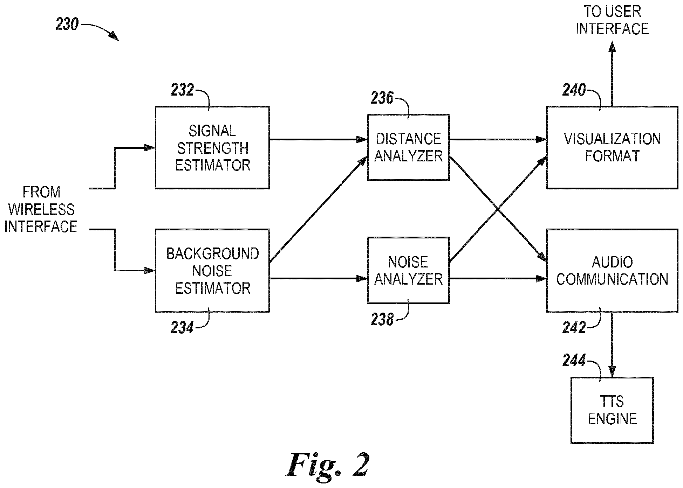

The figures herein follow a numbering convention in which the first digit or digits correspond to the drawing figure number and the remaining digits identify an element or component in the drawing. Similar elements or components between different figures may be identified by the use of similar digits. For example, 130 may reference element "30" in Figure 1, and a similar element may be references as 230 in Figure 2.

As used herein, "a" or "a number of" something can refer to one or more such things. For example, "a number of components" can refer to one or more components.

Figure 1 illustrates an example of a system 100 that includes an adaptive user interface for a heating, ventilation, and air conditioning (HVAC) system in accordance with one or more examples related to the present disclosure. As shown in Figure 1, system 100 can include a headset 104 and a computing device 120.

Headset 104 can communicate with (e.g., send communications to) computing device 120. For example, headset 104 can be a wireless headset, such as, for instance, a Bluetooth earpiece, that can communicate with computing device 120 over a radio frequency. However, embodiments of the present disclosure are not limited to a particular type of headset.

In the example illustrated in Figure 1, headset 104 is being worn by user 102 (e.g., user 102 is using headset 104 to communicate with computing device 120). User 102 can be a person performing a test on one or more components of the HVAC system (e.g., component 106, as will be further described herein). For example, user 102 can be a worker, operator, or manager of the HVAC system, among other types of users.

Computing device 120 can be, for example, a laptop or mobile device (e.g., smart phone, tablet, etc.) of user 102. However, embodiments of the present disclosure are not limited to a particular type of computing device. Computing device 120 can be used by user 102 to control the HVAC system (e.g., the components of the HVAC system). For example, computing device 120 can run a computer-based HVAC control system (e.g., an HVAC control software application or system) that can be used by user 102 while performing tests on the components of the HVAC system (e.g., component 106, as will be further described herein). User 102 can enter information (e.g., data) into, and/or observe information from, the control system during the test, as will be further described herein.

As shown in Figure 1, computing device 120 can include a user interface 122. A user (e.g., user 102) of computing device 120 can interact with computing device 120 via user interface 122. For example, user interface 122 can provide (e.g., display and/or present) information to, and/or receive information from (e.g., input by), the user of computing device 120, such as, for instance, information associated with a component of the HVAC system during a test of that component, as will be further described herein.

In some examples, user interface 122 can be a graphical user interface (GUI) that can include a display (e.g., a screen) that can provide and/or receive information to and/or from the user of computing device 120. The display can be, for instance, a touch-screen (e.g., the GUI can include touch-screen capabilities). As an additional example, user interface 122 can include a keyboard and/or mouse the user can use to input (e.g., enter) information into computing device 120 (e.g., into user interface 122). For instance, user 102 can enter information into the display of user interface 122 using the touch-screen capabilities, keyboard, and/or mouse when the user is located at or near computing device 120 (e.g., within arm's length of computing device 120). Embodiments of the present disclosure, however, are not limited to a particular type(s) of user interface.

As an example, user interface 122 can display information (e.g., data values, operating parameters, readings, statuses, actions, etc.) associated with a component of the HVAC system during a test of the component. The component can be, for example, HVAC component 106 illustrated in Figure 1.

Component 106 can be, for example an object, control component, equipment, device, network, sensor, and/or actuator of the HVAC system such as, for instance, valves such as a heating and/or cooling valves, chillers (e.g., chiller plant), boilers (e.g., boiler plant), pumps such as hot water and/or chilled water pumps, fans, compressors, air dampers such as a variable air volume (VAV) damper, air handling units (AHUs) (e.g., AHU plant), coils such as a heating and/or cooling coil, air filters, and/or cooling towers, among other components. Further, although one component is illustrated in Figure 1 for simplicity and so as not to obscure embodiments of the disclosure, embodiments can include any number of HVAC components. For instance, component 106 illustrated in Figure 1 can represent any number of components of the HVAC system, and/or connections between the components, such as a chain of equipment (e.g., duct work, pipes, ventilation, and/or electrical and/or gas distribution equipment) that connects the components, among other connections.

As shown in Figure 1, computing device 120 can include a wireless interface 124. Wireless interface 124 can receive communications from headset 104 (e.g., user 102). For example, wireless interface 124 can be and/or include an antenna that can receive communications from headset 104 over a radio frequency. That is, wireless interface 124 can receive radio frequency signals from headset 104.

As an example, wireless interface 124 can receive a voice communication 108 from (e.g., spoken by) user 102 over a radio frequency via headset 104. Voice communication 108 can include information associated with HVAC component 106. The information can include, for example, data values, operating parameters, readings, statuses, and/or actions read, observed, and/or determined by user 102 during testing of component 106, and/or a query, instruction, or command related thereto.

Voice communication 108 can be spoken by user 102, and received by wireless interface 124, while user 102 is at the location of component 106 (e.g., within arm's length of component 106 and/or where component 106 is installed), which may be a distance D from computing device 120, as illustrated in Figure 1. The distance D between user 102 and computing device 120 may be further than arm's length (e.g., more than 18 inches). For example, the distance D between user 102 and computing device 120 may be in the range of a few feet to a hundred feet. That is, user 102 may not be located at or near (e.g., may be located away from) computing device 120 when providing the information associated with component 106 to computing device 120. As such, user 102 may not have to go (e.g., walk) back and forth between component 106 and computing device 120 to conduct the test (e.g., to obtain the information associated with component 106 and provide the information to computing device 120). That is, user 102 can remain at the location of component 106 while conducting the test.

Voice communication 108 may also include (e.g., capture) background noise 110 that may be present at the location of HVAC component 106 while user 102 is speaking. Background noise 110 can include a number of different types of background noise. For example, background noise 110 can include a number of different noise levels that come from a number of different sources, such as, for example, noisy equipment, among other sources.

Voice communication 108 may also include a command (e.g., trigger phrase) from user 102 to activate wireless interface 124 and/or MUI system 130. That is, user 102 can activate wireless interface 124 and/or MUI system 130 using the command (e.g., wireless interface 124 and/or MUI system 130 can activate upon receiving the command). MUI system 130 will be further described herein. The command can be, for example, "start voice control". However, embodiments of the present disclosure are not limited to a particular command.

As shown in Figure 1, computing device 120 can include a memory 126 and a processor 128. Memory 126 can be any type of storage medium that can be accessed by processor 128 to perform various examples of the present disclosure. For example, memory 126 can be a non-transitory computer readable medium having computer readable instructions (e.g., computer program instructions) stored thereon that are executable by processor 128 to provide and/or operate an adaptive user interface for an HVAC system in accordance with the present disclosure. That is, processor 128 can execute the executable instructions stored in memory 126 to provide and/or operate an adaptive user interface for an HVAC system in accordance with the present disclosure.

Memory 126 can be volatile or nonvolatile memory. Memory 126 can also be removable (e.g., portable) memory, or non-removable (e.g., internal) memory. For example, memory 126 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 126 is illustrated as being located in computing device 120, embodiments of the present disclosure are not so limited. For example, memory 126 can also be located internal to another computing resource (e.g., enabling computer readable instructions to be downloaded over the Internet or another wired or wireless connection).

As shown in Figure 1, computing device 120 can include an adaptive multimodal user interface (MUI) system 130. MUI system 130 can provide and/or operate an adaptive user interface for an HVAC system in accordance with the present disclosure. For example, MUI system 130 can enter the information associated with HVAC component 106 included in voice communication 108 from user 102 in the information display on user interface 122. For instance, MUI system 130 can translate the spoken words of user 102 into a proper data format, and enter it into the information display on user interface 122 as if user 102 had typed it into the display using a keyboard or selected it from a menu using a mouse. MUI system 130, and the adaptive user interface provided and/or operated by MUI system 130, will be further described herein (e.g., in connection with Figure 2).

Figure 2 illustrates an example of an adaptive multimodal user interface (MUI) system 230 in accordance with one or more examples related to the present disclosure. MUI system 230 can provide and/or operate an adaptive user interface for an HVAC system in accordance with the present disclosure. MUI system 230 can be, for example, MUI system 130 previously described in connection with Figure 1.

As shown in Figure 2, MUI system 230 can include a signal strength estimator 232. Signal strength estimator 232 can be, for example, a Bluetooth receiver.

Voice communication 108 (e.g., the signal that includes the voice communication) received by wireless interface 122 from user 102 previously described in connection with Figure 1 can be input into signal strength estimator 232, as illustrated in Figure 2, and signal strength estimator 232 can determine the strength of voice communication 108. That is, signal strength estimator 232 can determine the strength of the signal (e.g., the radio frequency signal) that includes voice communication 108.

As shown in Figure 2, MUI system 230 can include a background noise estimator 234. Background noise estimator 234 can be, for example, an automatic speech recognizer (ASR) engine.

Voice communication 108 (e.g., the signal that includes the voice communication) received by wireless interface 122 from user 102 can also be input into background noise estimator 234, as illustrated in Figure 2. Background noise estimator 234 can filter out background noise 110 from voice communication 108 (e.g., from the signal that includes the voice communication) to recognize the information associated with HVAC component 106 included in voice communication 108. For instance, background noise estimator 234 can separate (e.g., distinguish) the information associated with HVAC component 106 in the signal from background noise 110 in the signal. That is, background noise estimator 234 can isolate and discard background noise 110 from the signal (e.g., the radio frequency signal) that includes voice communication 108 to recognize the information associated with HVAC component 106. Further, if background noise 110 includes a number of different types of background noise (e.g., as described in connection with Figure 1), background noise estimator 234 can distinguish between each of the different types of background noise.

Background noise estimator 234 can also determine the quality of voice communication 108 based on its recognition confidence of the voice communication (e.g., its level of confidence that it has correctly recognized the information associated with HVAC component 106 included in the voice communication). For example, the greater the recognition confidence, the greater the quality of the voice communication. The recognition confidence of background noise estimator 234 can depend on background noise 110 (e.g., the amount and/or number of different types of background noise).

As shown in Figure 2, MUI system 230 can include a distance analyzer module 236 and a noise analyzer module 238. As used herein, a "module" can include computer readable instructions that can be executed by a processing resource (e.g., processor 128 previously described in connection with Figure 1) to perform a particular function. A module can also include hardware, firmware, and/or logic that can perform a particular function. As used herein, "logic" is an alternative or additional processing resource to execute the actions and/or functions, described herein, which includes hardware (e.g., various forms of transistor logic, application specific integrated circuits (ASICs)), as opposed to computer executable instructions (e.g., software, firmware) stored in memory and executable by a processing resource.

The strength of voice communication 108 determined by signal strength estimator 232, and the quality of voice communication 108 determined by background noise estimator 234, can be input into distance analyzer module 236, as illustrated in Figure 2, and distance analyzer module 236 can determine the distance between user 102 can computing device 120 (e.g., distance D illustrated in Figure 1) based on the determined strength and/or quality of voice communication 108. For example, the lower the strength and/or the lower the quality of voice communication 108, the greater the distance may be between user 102 and computing device 120.

The information associated with HVAC component 106 and background noise 110, as filtered (e.g., separated) by background noise estimator 234, and the quality of voice communication 108 determined by background noise estimator 234, can be input into noise analyzer module 238, as illustrated in Figure 2, and noise analyzer module 238 can determine the amount (e.g., level) of the background noise. Noise analyzer module 238 can also determine whether the amount of background noise meets or exceeds a predetermined threshold, such as, for instance, a predetermined signal-to-noise ratio threshold.

As shown in Figure 2, MUI interface 230 can dynamically select (e.g., adjust) a visualization format 240 for the information display on user interface 122 previously described in connection with Figure 1 based on the distance between computing device 120 and user 102 determined by distance analyzer module 236, and enter the information associated with HVAC component 106 filtered by background noise estimator 238 in the display on the user interface. Visualization format 240 can refer to and/or include the style template of the information display on user interface 122, such as, for instance, the density of the information in the display, which can include the amount information included in the display (e.g., the number of data elements, icons, menu items, screen fields, etc. in the display) and/or the size (e.g., font size) of the information in the display, and/or the color (e.g., brightness) of the information in the display. For example, the greater the distance between computing device 120 and user 102, the lower the density (e.g., the lower the amount and/or greater the size) and/or the brighter the color of the information in the display, such that the information is easier to see from far away.

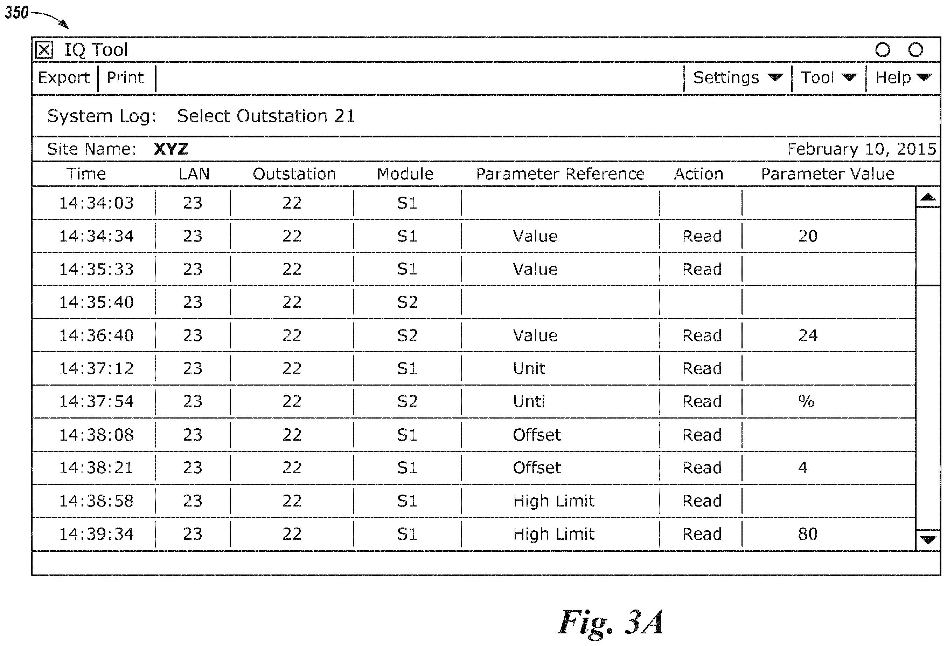

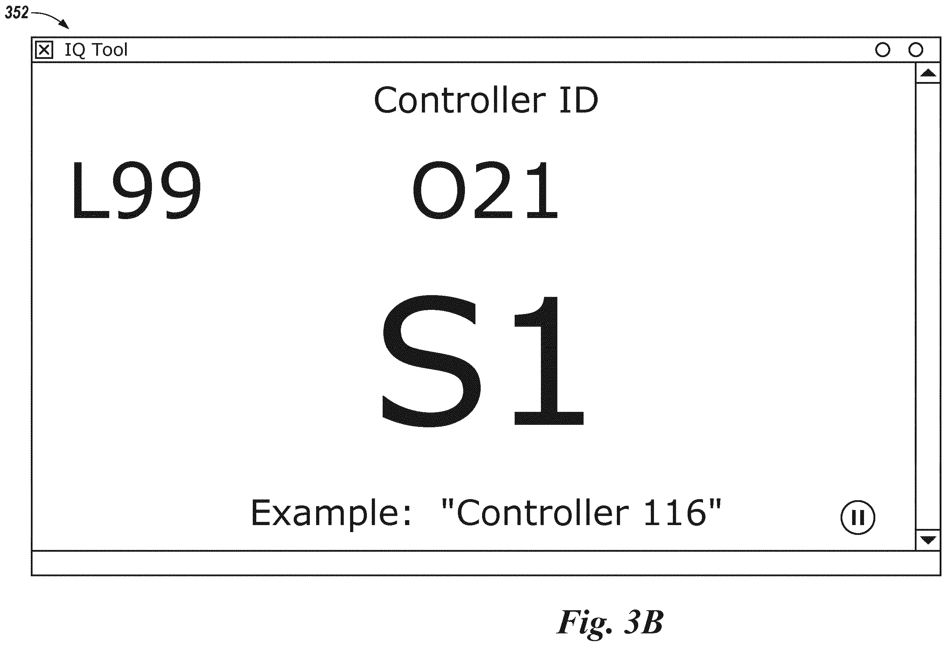

Dynamically selecting the visualization format 240 can include adjusting the visualization format for the information display from a first visualization format to a second visualization format based on a change in the distance between user 102 and computing device 120. For example, if distance analyzer 236 determines that the distance between user 102 and computing device 120 has increased (e.g., user 102 has moved far away from computing device 120), MUI system 230 can reduce the number of data elements in the display from over 100 icons and/or pull-down menu items to half a dozen screen fields, with the font sizes increased proportionally, so that the data can be seen by user 102 at the farther distance. An example of such a visualization format adjustment will be further described herein (e.g., in connection with Figures 3A and 3B).

MUI interface 230 can also dynamically select the visualization format 240 for the information display on user interface 122 based on the amount of background noise determined by noise analyzer module 238. For example, the greater the amount of background noise, the lower the density and/or the brighter the color of the information in the display.

As shown in Figure 2, MUI interface 230 can provide an audio communication (e.g., audio feedback) 242 to user 102 using text-to-speech (TTS) engine 244 after the information associated with HVAC component 106 received from user 102 has been entered in the display on user interface 122. Audio communication 242 can include, for example, a confirmation that the information has been entered in the display. For instance, audio communication 242 can include a beep (e.g., positive beep tone) confirming that the information has been entered, or audio communication 242 can repeat some or all the information back to user 102 to confirm that the information has been entered.

Audio communication 242 can also include information from (e.g., already in and/or previously entered in) the display that may be related (e.g., relevant to) the information received from user 102. For example, audio communication 242 can include information from data fields in the display that may be related to HVAC component 106.

MUI interface 230 can select a dialog format (e.g., mode) for audio communication 242 based on the distance between computing device 120 and user 102 determined by distance analyzer module 236. For example, the dialog format for audio communication 242 may be terse if user 102 is located near (e.g., within a few feet of) computing device 120, and the dialog format for audio communication 242 may be complex if user 102 is located far (e.g., more than a few feet) from computing device 120.

MUI interface 230 can also select the dialog format for audio communication 242 based on the amount of background noise determined by noise analyzer module 238. For example, the dialog format may be terse if there is a low level of background noise (e.g., if the level of background noise does not meet or exceed the predetermined threshold), and the dialog format may be complex if there is a high level of background noise (e.g., if the level of background noise meets or exceeds the predetermined threshold).

Further, MUI interface 230 can select the volume of audio communication 242 based on the amount of background noise determined by noise analyzer module 238. For example, the greater the amount of background noise, the higher the volume of audio communication 242.

In some examples related to the invention, if the level of background noise determined by noise analyzer module 238 meets or exceeds the predetermined threshold, MUI interface 230 can automatically repeat, using TTS engine 244, audio communication 242, or ask, using TTS engine 244, user 202 if he would like audio communication 242 repeated. This can be done in case user 202 did not initially hear audio communication 242 due to a high level of background noise at the user's location.

As an example, voice communication 108 received from user 102 may include a command to "Go to controller twenty one." If distance analyzer module 236 determines that user 102 is located near computing device 120, and/or if background noise analyzer module 238 determines the level of background noise at the location of user 102 is low, audio communication 242 may include a beep to confirm that information associated with controller twenty one is being displayed on user interface 122. If distance analyzer module 236 determines that user 102 is located far from computing device 120, and/or if background noise analyzer module 238 determines the level of background noise at the location of user 102 is high, audio communication 242 may repeat "Controller twenty one" to confirm that information associated with controller twenty one is being displayed on user interface 122.

Continuing with the example, after user 102 receives the confirmation that the information associated with controller twenty one is being displayed, user 102 may issue a new command to "Select sensor one". If distance analyzer module 236 determined that user 102 is located near computing device 120, and/or if background noise analyzer module 238 determined the level of background noise at the location of user 102 is low, audio communication 242 may include a beep to confirm that sensor one has been selected in the display on user interface 122, and may include a statement of "Heat discharge in west entrance". If distance analyzer module 236 determined that user 102 is located far from computing device 120, and/or if background noise analyzer module 238 determined the level of background noise at the location of user 102 is high, audio communication 242 may include a statement of "Sensor one has a label, heat discharge in west entrance. Say repeat if you want to hear this again."

Figures 3A-3B illustrate an example of an adjustment of the visualization format (e.g., visualization format 240 previously described in connection with Figure 2) for information displayed on an adaptive user interface in accordance with one or more examples related to the present disclosure. Display 350 shown in Figure 3A is an example of a visualization format used when the distance between user 102 and computing device 120 previously described in connection with Figure 1 is small (e.g., less than a few feet), and display 352 shown in Figure 3B is an example of a visualization format used when the distance between user 102 and computing device 120 is large (e.g., more than a few feet).

Displays 350 and 352 can be displayed on user interface 122, as previously described herein. For example, display 350, which includes a large amount of information about outstation 21 displayed in a small size, may be displayed if the distance between user 102 and computing device 120 is determined to be small. However, if it is subsequently determined that the distance between user 102 and computing device 120 has increased (e.g., user 102 has moved far away from computing device 120) the display can be adjusted to display 352, which includes a small amount of information about outstation 21 displayed in a large size.

It is to be understood that the above description has been made in an illustrative fashion, and not a restrictive one. Combination of the above embodiments, and other embodiments not specifically described herein will be apparent to those of skill in the art upon reviewing the above description.

Therefore, the scope of various embodiments of the disclosure should be determined with reference to the appended claims.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment.

## Claims

1. A computing device (120) for controlling a heating, ventilation and air conditioning, HVAC, system, comprising:
a wireless interface (124), wherein the wireless interface (124) is configured to receive a voice communication (108) from a user, wherein the voice communication (108) includes information associated with a component (106) of the HVAC system obtained by the user during a test of the component (106) being performed by the user while the user is at a location of the component (106), and wherein the voice communication (108) is received by the wireless interface (124) while a distance (D) between the computing device and the user exists; the computing device (120) being further adapted to determine the distance between the computing device and the user based on the voice communication (108) from the user;
a user interface (122) including a display that is configured to display information associated with a component (106) of the HVAC system, the computing device (120) being configured to accept information from the user via the user interface (122) when the user is within reach of the user interface (122), and to accept the information via the wireless interface (124) when the user is not within reach of the user interface (122);
the computing device (120) being adapted to select a visualization format (240) for display on the user interface (122) of the computing device (120) based on the determined distance between the computing device (120) and the user (102); and the computing device (120) further comprising a memory (126) and a processor (128), the processor (128) configured to:
execute executable instructions stored in the memory (126) to receive the information associated with the component (106) of the HVAC system that was included in the voice communication (108) from the user;
enter the received information in the display on the user interface (122); and
provide an audio communication (242) to the user confirming that the information associated with the component (106) of the HVAC system obtained by the user during the test of the component (106) and included in the voice communication (108) from the user has been entered in the display on the user interface (122).

2. The computing device (120) of claim 1, wherein the processor (128) is configured to further execute instructions to provide an audio communication (242) to the user, wherein the audio communication (242) includes information from the display related to the information associated with the component (106) of the HVAC system obtained by the user during the test of the component (106) and included in the voice communication (108) from the user.

3. The computing device (120) of claim 1, wherein the voice communication (108) includes a command to active the wireless interface (124).

4. The computing device (120) of claim 1, wherein the user interface (122) is configured to receive information associated with the component (106) of the HVAC system from the user.

5. A method for controlling a heating, ventilation and air conditioning, HVAC, system, comprising:
receiving, by a wireless interface (124) of a computing device (120) for controlling the HVAC system, a voice communication (108) from a user, wherein the voice communication (108) includes information associated with a component (106) of the HVAC system obtained by the user during a test of the component (106) being performed by the user while the user is at a location of the component (106), and wherein the voice communication (108) is received by the wireless interface;
determining, by the computing device (120), the distance between the computing device and the user based on the voice communication (108) from the user;
selecting, by the computing device (120) a visualization format (240) for a display on a user interface (122) of the computing device (120) based on the determined distance between the computing device (120) and the user (102);
entering, in a display on a the user interface (122) of the computing device (120), the information associated with the component (106) of the HVAC system obtained by the user during the test of the component (106) and included in the voice communication (108) from the user, the information being displayed in accordance with the visualization format (240) based on the determined distance,
wherein the method includes providing, by the computing device (120), an audio communication (242) to the user after entering the information associated with the component (106) of the HVAC system obtained by the user during the test of the component (106) and included in the voice communication (108) from the user in the display, the audio communication confirming that the information associated with the component (106) of the HVAC system obtained by the user during the test of the component (106) and included in the voice communication (108) from the user has been entered in the display on the user interface (122).

## Patentansprüche

1. Computervorrichtung (120) zum Steuern eines Heizungs-, Lüftungs- und Klimasystems, HKL (HVAC), die umfasst:
eine drahtlose Schnittstelle (124), wobei die drahtlose Schnittstelle (124) konfiguriert ist, um eine Sprachkommunikation (108) von einem Benutzer zu empfangen, wobei die Sprachkommunikation (108) Informationen enthält, die mit einem Bauteil (106) des HLK-Systems assoziiert sind, die von dem Benutzer während eines Tests des Bauteils (106), der von dem Benutzer durchgeführt wird, erhalten werden, während sich der Benutzer an einem Ort des Bauteils (106) befindet, und wobei die Sprachkommunikation (108) von der drahtlosen Schnittstelle (124) empfangen wird, während ein Abstand (D) zwischen der Computervorrichtung und dem Benutzer besteht; wobei die Computervorrichtung (120) ferner angepasst ist, um den Abstand zwischen der Computervorrichtung und dem Benutzer auf der Grundlage der Sprachkommunikation (108) von dem Benutzer zu bestimmen;
eine Benutzerschnittstelle (122) mit einer Anzeige, die konfiguriert ist, um Informationen anzuzeigen, die mit einem Bauteil (106) des HLK-Systems assoziiert sind, wobei die Computervorrichtung (120) konfiguriert ist, um Informationen von dem Benutzer über die Benutzerschnittstelle (122) anzunehmen, wenn sich der Benutzer in Reichweite der Benutzerschnittstelle (122) befindet, und die Informationen über die drahtlose Schnittstelle (124) anzunehmen, wenn sich der Benutzer nicht in Reichweite der Benutzerschnittstelle (122) befindet;
wobei die Computervorrichtung (120) angepasst ist, um ein Visualisierungsformat (240) zur Anzeige auf der Benutzerschnittstelle (122) der Computervorrichtung (120) auf der Grundlage des bestimmten Abstands zwischen der Computervorrichtung (120) und dem Benutzer (102) auszuwählen; und wobei die Computervorrichtung (120) ferner einen Speicher (126) und einen Prozessor (128) umfasst, wobei der Prozessor (128) konfiguriert ist, um:
ausführbare Anweisungen, die in dem Speicher (126) gespeichert sind, auszuführen, um die Informationen zu empfangen, die mit dem Bauteil (106) des HLK-Systems assoziiert sind, die in der Sprachkommunikation (108) von dem Benutzer enthalten waren;
die empfangenen Informationen in die Anzeige auf der Benutzerschnittstelle (122) einzugeben; und
eine Audiokommunikation (242) an den Benutzer bereitzustellen, die bestätigt, dass die Informationen, die mit dem Bauteil (106) des HLK-Systems assoziiert sind, die der Benutzer während des Tests des Bauteils (106) erhalten hat, und die in der Sprachkommunikation (108) von dem Benutzer enthalten sind, in die Anzeige auf der Benutzerschnittstelle (122) eingegeben wurden.

2. Computervorrichtung (120) nach Anspruch 1, wobei der Prozessor (128) konfiguriert ist, um ferner Anweisungen auszuführen, um dem Benutzer eine Audiokommunikation (242) bereitzustellen, wobei die Audiokommunikation (242) Informationen von der Anzeige enthält, die Informationen betreffen, die mit dem Bauteil (106) des HLK-Systems assoziiert sind, die der Benutzer während des Tests des Bauteils (106) erhalten hat, und die in der Sprachkommunikation (108) von dem Benutzer enthalten sind.

3. Computervorrichtung (120) nach Anspruch 1, wobei die Sprachkommunikation (108) einen Befehl zum Aktivieren der drahtlosen Schnittstelle (124) enthält.

4. Computervorrichtung (120) nach Anspruch 1, wobei die Benutzerschnittstelle (122) konfiguriert ist, um Informationen, die mit dem Bauteil (106) des HLK-Systems assoziiert sind, von dem Benutzer zu empfangen.

5. Verfahren zum Steuern eines Heizungs-, Lüftungs- und Klimasystems, HLK-System, das umfasst:
Empfangen durch eine drahtlose Schnittstelle (124) einer Computervorrichtung (120) zum Steuern des HLK-Systems, einer Sprachkommunikation (108) von einem Benutzer, wobei die Sprachkommunikation (108) Informationen enthält, die mit einem Bauteil (106) des HLK-Systems assoziiert sind, die von dem Benutzer während eines Tests des Bauteils (106), der von dem Benutzer durchgeführt wird, erhalten werden, während sich der Benutzer an einem Ort des Bauteils (106) befindet, und wobei die Sprachkommunikation (108) von der drahtlosen Schnittstelle empfangen wird;
Bestimmen durch die Computervorrichtung (120) des Abstands zwischen der Computervorrichtung und dem Benutzer auf der Grundlage der Sprachkommunikation (108) von dem Benutzer;
Auswählen, durch die Computervorrichtung (120), eines Visualisierungsformats (240) für eine Anzeige auf einer Benutzerschnittstelle (122) der Computervorrichtung (120) auf der Grundlage des bestimmten Abstands zwischen der Computervorrichtung (120) und dem Benutzer (102);
Eingeben, in eine Anzeige auf der Benutzerschnittstelle (122) der Computervorrichtung (120), der Information, die mit dem Bauteil (106) des HLK-Systems assoziiert ist, die von dem Benutzer während des Tests des Bauteils (106) erhalten wurde und in der Sprachkommunikation (108) von dem Benutzer enthalten ist, wobei die Information in Übereinstimmung mit dem Visualisierungsformat (240) auf der Grundlage des bestimmten Abstands angezeigt wird,
wobei das Verfahren Bereitstellen durch die Computervorrichtung (120) einer Audiokommunikation (242) an den Benutzer nach dem Eingeben der Informationen, die mit dem Bauteil (106) des HLK-Systems assoziiert sind, die von dem Benutzer während des Tests des Bauteils (106) erhalten wurden und in der Sprachkommunikation (108) von dem Benutzer in der Anzeige enthalten sind, umfasst, wobei die Audiokommunikation bestätigt, dass die Informationen, die mit dem Bauteil (106) des HLK-Systems assoziiert sind, die von dem Benutzer während des Tests der Komponente (106) erhalten wurden und in der Sprachkommunikation (108) von dem Benutzer enthalten sind, in die Anzeige auf der Benutzerschnittstelle (122) eingegeben wurden.

## Revendications

1. Dispositif informatique (120) pour contrôler un système de chauffage, de ventilation et de climatisation, CVC (HVAC), comprenant :
une interface sans fil (124), dans lequel l'interface sans fil (124) est configurée pour recevoir une communication vocale (108) d'un utilisateur, dans lequel la communication vocale (108) inclut des informations associées à un composant (106) du système CVC obtenues par l'utilisateur pendant un test du composant (106) effectué par l'utilisateur alors que l'utilisateur se trouve à un emplacement du composant (106), et dans lequel la communication vocale (108) est reçue par l'interface sans fil (124) alors qu'une distance (D) existe entre le dispositif informatique et l'utilisateur ; le dispositif informatique (120) étant en outre adapté pour déterminer la distance entre le dispositif informatique et l'utilisateur sur la base de la communication vocale (108) de l'utilisateur ;
une interface utilisateur (122) comprenant un écran qui est configuré pour afficher des informations associées à un composant (106) du système CVC, le dispositif informatique (120) étant configuré pour accepter des informations de l'utilisateur via l'interface utilisateur (122) lorsque l'utilisateur est à portée de l'interface utilisateur (122), et pour accepter les informations via l'interface sans fil (124) lorsque l'utilisateur n'est pas à portée de l'interface utilisateur (122) ;
le dispositif informatique (120) étant adapté pour sélectionner un format de visualisation (240) pour l'affichage sur l'interface utilisateur (122) du dispositif informatique (120) sur la base de la distance déterminée entre le dispositif informatique (120) et l'utilisateur (102) ; et le dispositif informatique (120) comprenant en outre une mémoire (126) et un processeur (128), le processeur (128) configuré pour :
exécuter des instructions exécutables stockées dans la mémoire (126) pour recevoir de l'utilisateur les informations associées au composant (106) du système CVC qui ont été incluses dans la communication vocale (108) ;
saisir les informations reçues dans l'affichage de l'interface utilisateur (122) ; et
fournir une communication audio (242) à l'utilisateur confirmant que les informations associées au composant (106) du système CVC obtenues par l'utilisateur pendant le test du composant (106) et incluses dans la communication vocale (108) de l'utilisateur ont été saisies dans l'affichage de l'interface utilisateur (122).

2. Dispositif informatique (120) selon la revendication 1, dans lequel le processeur (128) est configuré pour exécuter en outre des instructions pour fournir une communication audio (242) à l'utilisateur, dans lequel la communication audio (242) inclut des informations provenant de l'affichage relatives aux informations associées au composant (106) du système CVC obtenues par l'utilisateur pendant le test du composant (106) et incluses dans la communication vocale (108) de l'utilisateur.

3. Dispositif informatique (120) selon la revendication 1, dans lequel la communication vocale (108) inclut une commande pour activer l'interface sans fil (124).

4. Dispositif informatique (120) selon la revendication 1, dans lequel l'interface utilisateur (122) est configurée pour recevoir de l'utilisateur des informations associées au composant (106) du système CVC.

5. Procédé de contrôle d'un système de chauffage, de ventilation et de climatisation, CVC, comprenant :
la réception, par une interface sans fil (124) d'un dispositif informatique (120) destiné à contrôler le système CVC, d'une communication vocale (108) provenant d'un utilisateur, dans lequel la communication vocale (108) inclut des informations associées à un composant (106) du système CVC obtenues par l'utilisateur au cours d'un test du composant (106) effectué par l'utilisateur alors que l'utilisateur se trouve à un emplacement du composant (106), et dans lequel la communication vocale (108) est reçue par l'interface sans fil ;
la détermination, par le dispositif informatique (120), de la distance entre le dispositif informatique et l'utilisateur sur la base de la communication vocale (108) de l'utilisateur ;
la sélection, par le dispositif informatique (120), d'un format de visualisation (240) pour un affichage sur une interface utilisateur (122) du dispositif informatique (120) en fonction de la distance déterminée entre le dispositif informatique (120) et l'utilisateur (102) ;
la saisie, dans un affichage sur l'interface utilisateur (122) du dispositif informatique (120), des informations associées au composant (106) du système CVC obtenues par l'utilisateur lors du test du composant (106) et incluses dans la communication vocale (108) de l'utilisateur, les informations étant affichées conformément au format de visualisation (240) basé sur la distance déterminée,
dans lequel le procédé inclut la fourniture, par le dispositif informatique (120), d'une communication audio (242) à l'utilisateur après avoir entré les informations associées au composant (106) du système CVC obtenues par l'utilisateur pendant le test du composant (106) et incluses dans la communication vocale (108) de l'utilisateur sur l'affichage, la communication audio confirmant que les informations associées au composant (106) du système CVC obtenues par l'utilisateur pendant le test du composant (106) et incluses dans la communication vocale (108) de l'utilisateur ont été entrées sur l'affichage sur l'interface utilisateur (122).
